# EUROPEAN PATENT APPLICATION

(11) **EP 1 388 564 A1**
(43) Date of publication of application: **11.02.2004**
(21) Application number: 02102112.6
(22) Date of filing: 08.08.2002
(51) Int. Cl.: C08K 5/3465, C08K 5/00, C08K 3/00, C08K 3/04, C08K 5/09, C08K 5/04

(54) **Polyamide composition, process of preparation and use for making moulded articles**

(71) Applicant: DSM IP Assets B.V., 6411 TE Heerlen (NL)
(72) Inventor: Crevecoeur, Jeroen Joost, 6211 BH Maastricht (NL); Veenstra, Jannes, 7814 PE Weerdinge (NL)
(74) Representative: Krijgsman, Willem

(57) **Abstract**

The invention relates to a polyamide composition, comprising a polyamide, a black polyaniline derivative, a branching agent having functional groups that can react with functional groups on the polyamide, and carbon black. The composition according to the invention has a rheological behavior characterized by an increased low shear viscosity and increased shear-thinning ratio compared with a composition not containing carbon black. Furthermore, molded parts obtained from the composition according to the invention have good mechanical properties, good surface appearance and improved weld strength properties. The invention ffurther relates to a process for preparing the polyamide composition according to the invention, use of the polyamide composition for preparing a moulded part, a moulded part, a process for preparing an assembled product, and an assembled product.

## Description

The invention relates to a polyamide composition comprising a polyamide and a black polyaniline derivative.

Such a composition is known from JP-200-061983.

In the composition from JP-200-061983, the polyamide is polyamide 6, polyamide 6,6 or a mixture thereof. As the black polyaniline derivative nigrosine is used. The composition furthermore comprises glass fibers. The known composition is used in JP-200-061983 for making air inlet manifolds and is reported to have good mechanical strength, heat resistance, chemical resistance and welding strength.

A disadvantage of the known composition is that it has substantially Newtonian flow behavior and that melt viscosity of the composition at low shear rate is relatively low. For several processes applied in the molding industry, like blow molding and injection molding, a composition having a relative high low-shear viscosity and/or a non-Newtonian melt flow behavior is desirable.

Substantially Newtonian flow behavior is here understood to mean a rheological behavior characterized by a relatively low ratio between the viscosity at low shear rate (further called low-shear viscosity) and the viscosity at high shear rate (further called high-shear viscosity). In this application the said ratio is referred to as shear-thinning ratio. Non-Newtonian melt flow behaviour is here understood to mean a rheological behaviour involving an increase in the melt viscosity of a molten polymer composition with decreasing shear rate and is characterised by a relatively high shear-thinning ratio. This rheological behavior is also described as shear-thinning behavior.

A known method to increase the low shear viscosity and/or the shear-thinning ratio of a polyamide composition is by adding to the composition a branching agent that can react with the polyamide. However, it has been observed by the inventors that this method, when applied to the known composition, does not result in the desired modification of the rheological behavior or only in a small increase in shear-thining ratio, even when a relatively large amount of branching agent is added.

The object of the invention is to provide a polyamide composition comprising a polyamide and a black polyaniline derivative having a modified rheological behavior characterized by an increased low shear viscosity and/or an increased shear-thinning ratio.

This object is achieved with the polyamide composition according tothe invention, which composition further comprises at least a branching agent having functional groups that can react with functional groups on the polyamide, and carbon black. The composition modified according to the invention has a rheological behavior characterized by an increased low shear viscosity and increased shear-thinning ratio compared with the non-modified composition. A substantial improvement of the rheological behaviour can already be obtained with a relative low amount of branching agent in the presence of carbon black, whereas a significantly larger improvement, relative to the composition without carbon black, is attained with larger amounts of branching agent in the presence of carbon black. Furthermore, molded parts obtained from the composition according to the invention have good mechanical properties, good surface appearance and improved weld strength properties.

Suitable polyamides that can be used in the composition according to the invention are generally all thermoplastic polyamides, but semi-crystalline polyamides are preferred in view of their favourable processing and mechanical properties. Examples include polyamide-6 (PA-6), PA-6,6, PA-4,6, PA-6,9, PA-6,10, PA-11, PA-12, PA-MXD6, and copolymers and mixtures of such polyamides.

In a preferred embodiment, the polyamide is a semi-aromatic copolyamide, like PA-6,6/6,T/6,I, PA-6,I/6, PA-6,T/12, PA-6,6/6,T and PA-6,T/4,T. These polyamides have good heat stability and mechanical properties.

In another preferred embodiment, the polyamide is chosen from the aliphatic polyamides PA-4,6, PA-6,6, PA-6, PA-4,10, PA-4,12 and any copolymers of these. More preferably, the polyamide is PA-4,6. PA-4,6 is a polyamide well appreciated for its performance in engineering plastics in high temperature applications and polyamide-4,6 is widely used polyamide, well available, moderately priced with good flexibility properties.

Also more preferably, the polyamide is chosen from PA-6 or PA-6/6,6 copolymer. The advantage of these polyamides is that they have good flexibility with good dimensional stability.

Most preferable, the polyamide is PA-6. This polyamide has the advantage that the composition may comprise more branching agent, without the risk of gelformation due to crosslinking.

Preferably the polyamide comprised in the composition according to the invention, in particular PA 6, has a relative solution viscosity (RSV) of 2.0 to 3.5 (measured on a 1 weight % solution in 90% formic acid at 25°C). More preferably, the polyamide has an RSV of 2.2 to 2.8, and most preferably of 2.3 to 2.6.

Suitable polyamides generally have 0.1 to 1 amine group as end-groups per linear chain molecule. The amine group content preferably is at least 20 meq/kg, more preferably 30 meq/kg and most preferably 40 meq/kg. The advantage of higher amine group content is a stronger increase in viscosity and more pronounced non-Newtonian melt flow behaviour as a result of reaction with functional groups in the branching agent.

Polyamide compositions comprising a polyamide and a black polyaniline derivative are typically applied in the molding industry for preparing polyamide based products that can be used for instance in the automotive industry. Black polyaniline derivatives are generally used for dark coloured or black products needing a good surface appearance. A suitable black polyaniline derivative that can be used in the composition according to the invention is, for example, nigrosine. Preferably nigrosine is used as the black polyaniline derivative, having the advantage of resulting in moulded products with a very good surface quality.

Carbon black that can be used in the composition according to the invention, can be any carbon black that is generally used in polyamides. Suitable carbon blacks include furnace and gas blacks. Preferably, the carbon black has an average particle size below 40µm, more preferably 20 µm, and even more preferably below 15 µm. The advantage of a smaller particle size is that the effect of improved rheologic behaviour can be obtained with lower amount of carbon black.

Suitably, for preparing the composition according to the invention, the black pigments are supplied in the form of a masterbatch. Preferably, the masterbatch comprises the black pigments in a polyamide.

Suitable branching agents that can be used in the composition according to the invention are branching agents that have functional groups that can react with amino and/or carboxylic end-groups in the polyamide. Preferably, the branching agent comprises functional groups chosen from the group of carboxylic acids and carboxylic acid anhydrides, or derivatives thereof, and epoxies. The advantage of these groups is that these can react with the functional groups in the polyamide during melt-processing of the composition in regular compounding processes in an extruder. Examples of suitable branching agents are oligomers and polymers comprising monomers having said functional groups.

More preferably the branching agent comprises a copolymer of at least an unsaturated dicarboxylic acid or a derivative thereof and a vinyl aromatic monomer. The advantage is that the branching agent can be prepared by easy processes and from cheap raw materials, and that the effect of the copolymer when used as a branching agent can be controlled by the composition of the copolymer.

Examples of suitable unsaturated dicarboxylic acids or derivatives thereof that can be used as monomer for the copolymer are maleic acid or itaconic acid, or derivatives thereof, for example maleic anhydride (MA), N-phenyl maleinimide or itaconic anhydride. Dicarboxylic acid derivatives are here understood to be in particular anhydride or imide derivatives.

Examples of suitable vinyl aromatic monomers are styrene, α-methylstyrene, or a styrene in which the aromatic ring contains a halogen or alkyl substituent. At least is here understood to mean that the copolymer may also contain a minor amount of one or more other monomers. Preferably, however, is a copolymer of maleic anhydride and styrene (SMA). The MA content of the copolymer generally lies between 5 and 40 weight %, preferably between 10 and 35. The advantage of a MA content above 10 weight % is that a higher degree of branching can be achieved through reaction with a thermoplastic polymer containing amine groups, for example a polyamide. The advantage of a MA content below 35 weight % is that the risk of gelformation is reduced. More preferably the MA content is between 20 and 30 weight %. With these ranges the above mentioned advantages are further increased.

Better weld strength is obtained when the branching agent comprises
(a) a copolymer of at least an unsaturated dicarboxylic acid or a derivative thereof and a vinylaromatic monomer, preferably styrene maleic anhydride copolymer (SMA), and
(b) a copolymer of acrylonitril and a vinylaromatic monomer, preferably styrene-acrylonitril copolymer (SAN) wherein (a) and (b) are miscible and the ratio (a) / (b) is between 1/3 to 3/1. The advantage is that such a branching agent gives less gel formation and yields more homogeneous properties.

Even more preferably, the branching agent contains
(a) 5-75 weight % of the copolymer of at least an unsaturated dicarboxylic acid or a derivative thereof and a vinyl aromatic monomer;
(b) 5-75 weight % of a copolymer of acrylonitrile and a vinyl aromatic monomer;
(c) 0-80 weight % of an inert processing aid; and
(d) 0-10 weight % customary additives;
in which (a) and (b) are miscible, the ratio (a)/(b) is from 1/3 to 3/1, and the total of (a)+(b)+(c)+(d) is 100%.

The advantage of this branching agent is a much better reproducibility when preparing a polyamide composition with non-Newtonian melt flow behavior and a much more accurate control of the viscosity, while in addition hardly any problems are caused by formation of gel particles. A further advantage is that a high MA content can be used without occurring of any undesirable crosslinking and formation of insoluble particles (gel particles). Another advantage is that larger amounts of branching agent can be added, so that there are fewer dosing problems in the production of a polyamide composition.

Suitable vinyl aromatic monomers in component (b) are the same as described for the copolymer (a), with (b) preferably being a copolymer of styrene and acrylonitrile (SAN). The acrylonitrile (AN) content of (b) generally lies between 5 and 40 weight %, preferably between 10 and 35, and more preferably between 20 and 30 weight %. The advantage of a higher AN content is a higher polarity of the copolymer, which improves the compatibility with polyamides.

As a rule, an SMA copolymer is miscible with a SAN copolymer if the ratio between the MA content and the AN content of the respective copolymers is roughly between 1.6 and 0.6. Preferably the branching agent therefore contains SMA and SAN copolymers with a ratio between the MA content and the AN content of between 1.6 and 0.6, more preferably between 1.2 and 0.8.

The ratio between the amounts of components (a) and (b) may in principle vary between 3/1 and 1/3. Preferably the (a)/(b) ratio lies between 2/1 and 1/2. This has the advantage that a better dispersion of the branching agent is obtained.

In an even more preferred embodiment of the invention, the branching agent contains 10-80 weight % of an inert processing aid. A thermoplastic polymer is an example of a suitable processing aid. This has the advantage that dosing of the branching agent is greatly improved and can be controlled much more accurately. This inert processing aid also serves as carrier material for the preparation of a branching agent in the form of a SMA and SAN concentrate. Inert is understood to mean that the processing aid or the carrier material does not react with the other components (a) and (b) and with a thermoplastic polymer containing amine groups to which the branching agent is later added, and neither does it interfere to any undesirable extent with the reaction between anhydride groups and amine groups. The inert processing aid is preferably a thermoplastic polyolefin. This is understood to be a polymer or copolymer of substantially at least one olefin, which may also incorporate minor amounts of other monomers. Suitable examples include various types of polyethylene, including low- and high-density polyethylene (LDPE, HDPE), ethylene/α-olefin copolymers such as plastomers, ethylene copolymers with a vinyl monomer or an alkyl(meth)acrylate, such as for example vinyl acetate or ethyl acrylate, and propylene homopolymer and copolymers. The branching agent preferably contains an LDPE as inert processing aid in view of its good processability. In a special embodiment the branching agent contains between 40 and 80 weight % of an inert processing aid.

As additives (d) the branching agent may contain the customary stabilizers, antioxidants and the like. The branching agent may also contain compounds that promote the desired reaction between anhydride groups of the branching agent and amine groups of a thermoplastic polymer.

Preferably, the composition according to the invention comprises the branching agent in such an amount that the content of component (a) in the polyamide composition is 0.01-6 weight % relative to the polyamide, more preferably 0.05-3, and most preferably 0.1-1.5 weight %. A higher amount of branching agent is preferred when an SMA with a low anhydride group content is used and a low amount is preferred when an SMA with a high anhydride content is used. A larger amount of branching agent and/or a higher anhydride groups content in the branching agent generally results in a stronger increase in the viscosity and more pronounced non-Newtonian melt flow behaviour of the polyamide composition.

The composition according to the invention comprises at least a polyamide, a black polyaniline, a branching agent, and carbon black. Typically, in the composition according to the invention the branching agent is present in an amount of 0.05 to 10 weight %, carbon black in an amount of 0.1 to 2.5 weight % and the black polyaniline derivative in an amount of 0.1 to 2.5 weight %, with the weight % relative to the amount of polyamide. Preferably, in the composition according to the invention the branching agent is present in an amount of 0.05 to 5 weight %, carbon black in an amount of 0.1 to 1 weight % and the black polyaniline derivative in an amount of 0.1 to 1 weight %, with the weight % relative to the amount of polyamide. If the branching agent comprises a SMA copolymer, the branching agent is used in such an amount that the composition comprises preferably between 0.05 and 0.5 weight % maleic anhydride relative to the weight of the polymaide.

The polyamide composition according to the invention may also contain 0-60 weight % other additives. Preferably these additives are chosen so that they do not significantly interfere with the desired reaction between amine groups and anhydride groups. Examples of additives are stabilizers, antioxidants, colorants, release agents and lubricants and the like, flame retardants, impact modifiers, and fillers and reinforcing agents. Preferably the polyamide composition contains at least a combination of a copper salt and an alkali halide, such as Cu/KI, as stabilizer. Examples of suitable impact modifiers are rubber-like polymers that not only contain apolar monomers such as olefins, but also polar or reactive monomers such as, among others, acrylates and epoxide, acid or anhydride containing monomers. Examples include a copolymer of ethylene with (meth)acrylic acid or an ethylene/propylene copolymer functionalized with anhydride groups. The advantage of such additives is that they do not only improve the impact strength of the polyamide composition but also contribute to an increase in viscosity. Suitable fillers and reinforcing agents are mineral fillers such as clay, mica, talc, glass spheres and fibrous reinforcing agents such as glass fibres. As reinforcing agent the polyamide composition preferably contains 5-50 weight % glass fibres, relative to the total composition, more preferably 10-45, and most preferably 15-40 weight % glass fibres. Suitable glass fibres generally have a diameter of 5-20 micron, preferably 8-15 micron, and are provided with a coating suitable for use in polyamide. The advantage of a polyamide composition with glass fibres is its increased strength and stiffness, particularly also at higher temperatures, which allows use at temperatures up to close to the melting point of the polyamide in the polyamide composition. This is important especially for use in the automotive sector, and particularly in or near the engine compartment.

The invention also relates to a process for preparing a polyamide composition comprising melt-mixing of a polyamide and a black polyaniline derivative. Such a process is known from JP-200-061983. In the known process polyamide-6 or polyamide-6,6 is melt mixed with nigrosine and glass fibres in an extruder. The process according to the invention comprises melt-mixing of a polyamide, a black polyaniline derivative, and further at least a branching agent having functional groups that can react with functional groups on the polyamide, and carbon black. The process results in the composition having the advantages of the invention.

In a preferred embodiment of the process according to the invention, polyamide, branching agent, black polyaniline derivative and carbon black and other additives (components) are melt-mixed using an extruder, preferably a twin-screw extruder, it being possible for components to be supplied both to the throat of the extruder and to the melt. The temperature at which the process is carried out depends on the melting point of the polyamide used and generally lies between 200 and 350°C. Preferably such a throughput rate is chosen that the residence time in the extruder, combined with the temperature, is sufficient for the reaction between functional groups of the branching agent and amine groups of the polyamide to take place virtually completely. The advantage of a complete reaction is that the polyamide composition will not undergo any strong changes in viscosity when it is later melt-processed using a shaping technique.

After melt mixing and granulation followed by drying, the polyamide composition is suitable for further use. If desired the viscosity can be increased further by means of a solid-phase post-condensation reaction. This involves exposure of the polyamide composition under reduced pressure for, for example, 1-50 hours to a temperature up to at most about 10°C below the melting point of the polyamide in the polyamide composition until the desired viscosity level is reached. Such a post-condensation is applied in particular for the preparation of a polyamide composition to be processed by means of an extrusion blow moulding technique, this yielding an even better melt strength.

In another embodiment of the process according to the invention the components of a polyamide composition are first mixed in solid condition and melt mixing takes place during a shaping step, for example during an extrusion or injection moulding step. The advantage compared with a process in which first a polyamide composition is prepared, which is then shaped, is that one processing step is avoided. This is in particular advantageous when a branching agent is used which is readily dispersed in a polyamide and the reaction between the functional groups in the branching agent and in the polyamide takes place within the time necessary for regular extrusion or injection moulding, thus not needing an extension of the processing time.

In a special embodiment a polyamide composition as obtained in granular form using the process according to the invention is then mixed with granules of a conventional polyamide composition having a lower viscosity and optionally a different composition, and processed as such as a granular mixture in a shaping step. This has the advantage that various compositions whose rheological properties are suited to the demands of a particular application can be obtained in a flexible and economic manner.

The invention also relates to the use of a polyamide composition according to the invention for manufacturing a part or moulded article by means of an injection moulding or extrusion technique. The higher low-shear viscosity and the non-Newtonian rheological behaviour of the polyamide composition according to the invention is advantageous in particular when shaping takes place by means of extrusion, for example into a rod, profile or tube, and in particular when a (hollow) moulded article is manufactured using an extrusion blow moulding technique. Extrusion blow moulding generally involves the manufacture of a tubular, still molten preform, the melt strength of the polyamide composition having to be such that the preform does not stretch or change shape under its own weight. Examples of extrusion blow moulding techniques that are used in practice include co-extrusion blow moulding, sequential extrusion blow moulding and 3D extrusion blow moulding. The polyamide composition according to the invention also offers advantages when processing takes place by means of an injection moulding technique, because the high viscosity at a low shear rate to a large extent prevents the formation of burs caused by the flow of the molten polyamide composition between mould parts. On the other hand, at high shear rates, which prevail during the injection moulding process, there is only a marginal increase in viscosity, which means that the composition according to the invention can be moulded without any changes to be applied to the mould.

The invention also relates to a moulded part prepared from the composition according to the invention or obtainable by means of an injection moulding or extrusion technique. The advantage is that the part has a gfood surfaqce appearance and that an assembled product made from the moulded part by eans of a welding technique has improved welding strength.

The invention furthermore relates to a process for preparing an assembled product in which at least two parts are bonded together by means of a welding technique, with at least one of the parts substantially consisting, at least at the location of a surface to be welded, of a polyamide composition according to the invention. The parts can be obtained, for instance, by means of an injection moulding or extrusion technique. It has been found that if at least one part is made from a polyamide composition according to the invention this results in a substantial improvement of the weld seam strength.

A special embodiment is a process in which all parts substantially consist of a polyamide composition according to the invention, so that an optimum weld seam strength is obtained.

A welding technique is here understood to be a way of bonding several parts together in which the plastic is heated to above its melting point at the location of the contact areas to be bonded together, and cooled. Heating of the contact areas can be effected in several ways, for instance by contacting the contact areas with a heated metal plate, by heating the plastic using ultrasonic vibrations (ultrasonic welding), or by generating friction heat by rotating the contact areas against each other (rotation welding) or rubbing them together (vibration welding) at a high speed. Preferably vibration welding is used for joining parts as this makes it possible to produce complex moulded articles. In another preferred embodiment, heated tool welding is applied, having the advantages that higher melt strength can be obtained and that undercuts in the injection moulding process can be avoided and, compared with the process wherein a unmodified polyamide composition is used, that less melt adhesion and surface contamination of the heated tool occurs when the moulded part is removed from the heated tool.

The invention furthermore relates to an assembled product comprising a moulded part according to the invention. Preferably the assembled product comprises at least two parts being bonded together by means of a welding technique, at least one of these parts is a moulded part according to the invention.

In particular the invention relates to a moulded article or assembled product for use in the automotive industry, such as a convoluted tube, a bellows, a liquid container, a component of the fuel system, an air-inlet manifold or an air duct.

The invention is further illustrated with the following examples and comparative experiments.

### Materials used.

- SMA:: a styrene-maleic anhydride copolymer with a maleic anhydride content of 28 mass% and Mw =110.000 (type Stapron® SZ28110, DSM, NL);
- SAN:: a styrene-acrylonitrile copolymer with a AN-content of 28 mass%, MFI (220°C, 10 kg) 50 g/10min (DSM, NL);
- LDPE:: a low-density polyethylene (type Lupolen® 1810H, BASF, DE);
- PA-6-I:: polyamide-6, ηᵣₑₗ = 2.5 (measured at 1 weight % in formic acid, 25°C) (type Akulon ® C225, DSM, NL); melt shear viscosity 200 Pa.s at 100 s⁻¹ and 260°C.
- PA-6-II:: polyamide-6, ηᵣₑₗ = 2.2 (measured at 1 weight % in formic acid, 25°) (type Akulon ® K122, DSM, NL); melt shear viscosity 140 Pa.s at 100 s⁻¹ and 260 °C.
- Pigment-I:: Black PE 48/93; PE based masterbatch (ex Colloids) carbon black content 30 weight %.
- Pigment-II:: N 54/1033 PA-6 based masterbatch (ex Colloids); nigrosine content 40 weight %
- Pigment-III:: N 54/14; PA-6 based masterbatch (ex Colloids); nigrosine content 15 weight % / carbon black content 15 weight
- GF-I:: standard polyamide glass fiber used in polyamide-6
- Branching agent BA-I:: a blend of SMA/SAN/IdPE 25/25/50

### Preparation of the branching agent BA-I

A mixture of SMA/SAN/IdPE, with a weight ratio of 25/25/50 was prepared on an extruder type ZSK 57, with a temperature setting at 230°C and a rotation speed of 200 rpm. The throughput was 110 kg/hour, controlled by the momentum at 85%. The mixture was readily extruded and processed into granules with regular dimensions.

### Examples I-III and Comparative Experiments A-I

### Preparation of the polyamide compositions

Various compounds, with the compositions reported in Table 1, have been prepared on a ZSK 30 twin-screw extruder equipped with a "glass-mild" screw at a barrel temperature of 270 °C and a screw speed of 250 rpm. These compositions were prepared by feeding PA-6-I, branching agent BA-I, black pigment concentrate, regular processing aids and stabilizers to the throat of the extruder. Glass was added via a side-feed. The throughput was 10 kg/hr. The melt temperature at the die was approximately 300 °C. All compounds were degassed during extrusion. The extruded strands were chopped into granules and dried.

### Testing

The rheological behaviour of the compositions was measured by means of a Rheometrics RMS800 Dynamic-Mechanical Spectrometer (DMS) in the shear rate range of 0.1-100 rad/s at a temperature of 260 °C (parallel plate geometry, diameter = 25 mm).

The relative solution viscosity (RSV) of the compositions after extrusion was measured on a 1 weight % solution in 90% formic acid at 25 °C after filtration to remove insoluble substances.

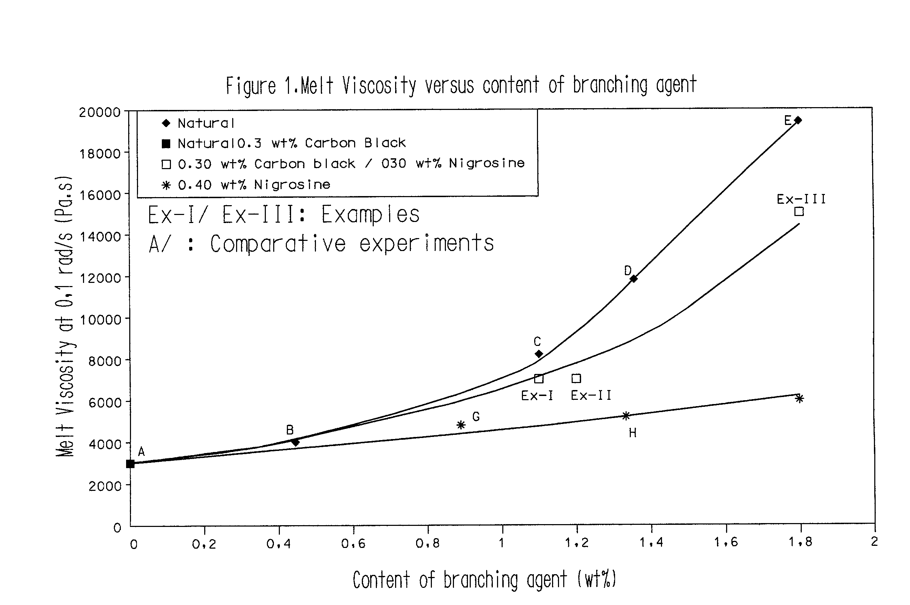

The results are shown in Table 2. Part of the results is graphically represented in Figure I, showing the melt viscosity versus the content of branching agent. The lines shown in the Figure are trend lines for the compositions comprising no black pigment and denoted "natural", the compositions comprising Carbon Black and Nigrosine and the Compositions comprising only Nigrosine as the black pigment. The results show that the branching agent has an increasing effect on the relative solution viscosity as well as the melt viscosity, more so on the low-shear melt viscosity. This effect is lowest for the compositions comprising only nigrosine as the black colorant and is highest for the compositions without nigrosine, i.e. without black colorant or only with carbon black. This effect can be interpreted in a way that nigrosine almost eliminates the low-shear viscosity enhancing effect of the branching agent. Comparative Experiment F, comprising only carbon black as a black pigment, shows a low-shear viscosity level that is slightly lower than can be extrapolated for a comparable composition without carbon black. This can be interpreted in such a way that carbon black has no or a slightly reducing effect on the viscosity enhancing effect of the branching agent. The results of Examples l, II and III, all compositions comprising a combination of black pigments in the form of nigrosine and carbon black, show that the viscosity enhancing effect of the branching agent, though being less than in the non-pigmented compositions, is much larger than in the comparable compositions containing only nigrosine and, even more surprisingly, is much higher than could be expected from the addition of carbon black to such formulations on the bases of the effect observed from Comparative Experiment F in comparison with Comparative Experiments C-E.

### Example IV and Comparative Experiments J, K and L

### Preparation of the polyamide compositions

Compounds according to Example IV with a composition similar to Example I, Comparative Experiments J and K with a composition similar to Comparative Experiments I and F, and Comparative Example J, reported in Table 3, were prepared in a quantity of 300 kg on a ZSK 57 extruder at a barrel temperature of 270 °C and a screw speed of 250 rpm. Glass was added via a side-feed; all other components were added via the hopper. The throughput was 60 kg/hr. The melt temperature at the die was around 350 °C. The melt was degassed by applying a negative pressure. The extruded strands were chopped into granules and dried.

### Injection molding and vibration welding tests

The 300 kg samples of the compositions of Example IV and Comparative Experiments J, K and L were used for injection molding. These materials were injection moulded into two articles which were subsequently joined by means of vibration welding to form an air-inlet manifold. In general, the resulting weld seam is the weakest point of such a part. Its strength was determined by means of bursting pressure tests under different conditions. The results obtained are presented in Table 4.

The results are lowest for the composition of Comparative Experiment L, comprising only carbon black as the black pigment, which results do not pass the requirements for this application. Comparison of the results of the Comparative Experiments K shows that the branching agent has a positive effect on the burst pressure. The compositions of Example IV, comprising nigrosine and carbon black, and Comparative Experiment J, comprising nigrosine, both comprising branching agent, resulted in parts with improved surface quality compared to the two composition only comprising carbon black. Furthermore, Example IV and Comparative Experiment J, show further improved and mutually comparable results for the burst pressure. However, the nigrosine / carbon black combination requires much less branching agent to reach the equivalent results, illustrating that the effect of the branching agent is more emphasized when next to nigrosine also carbon black is present.

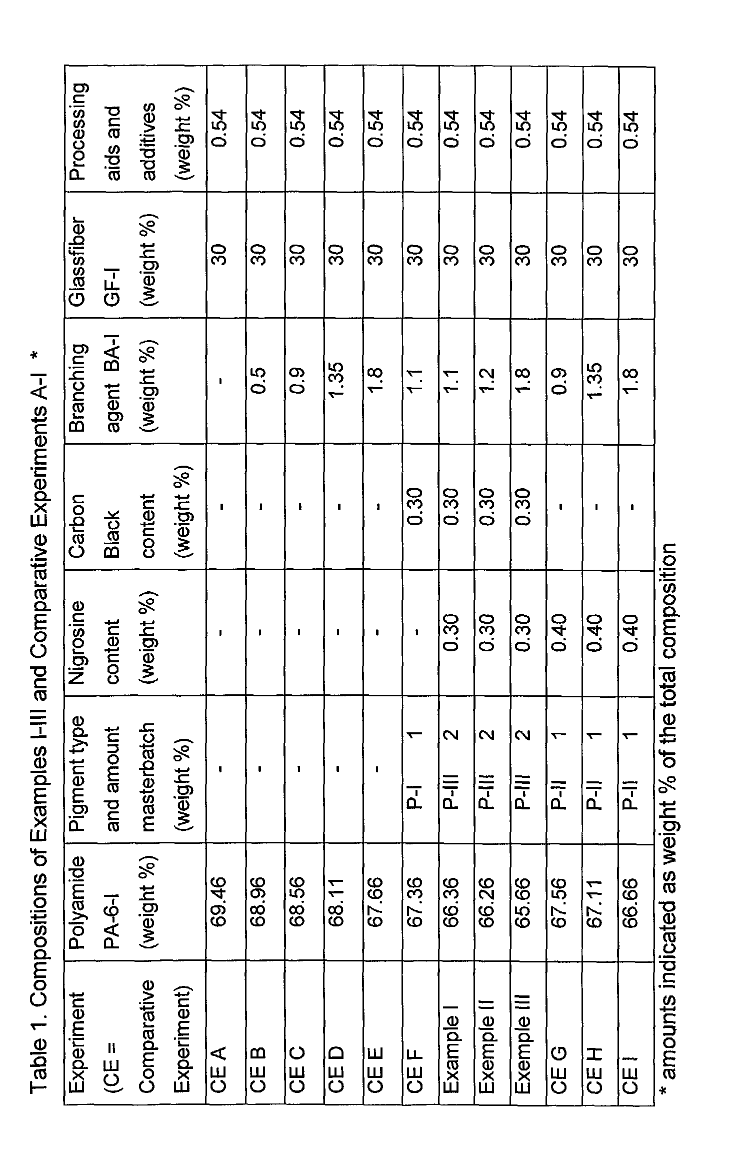

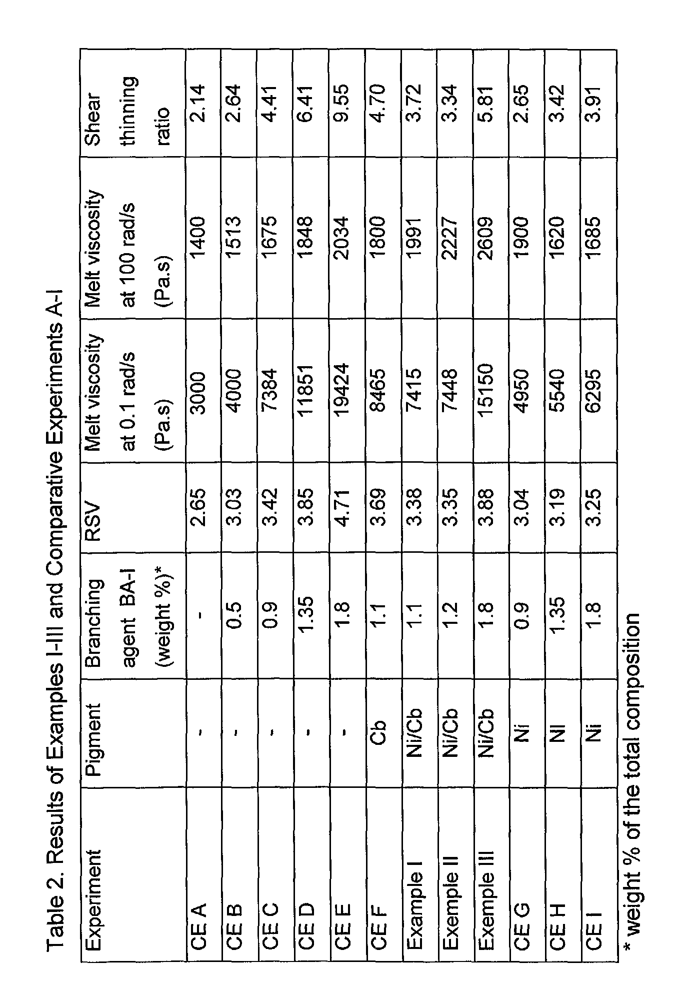

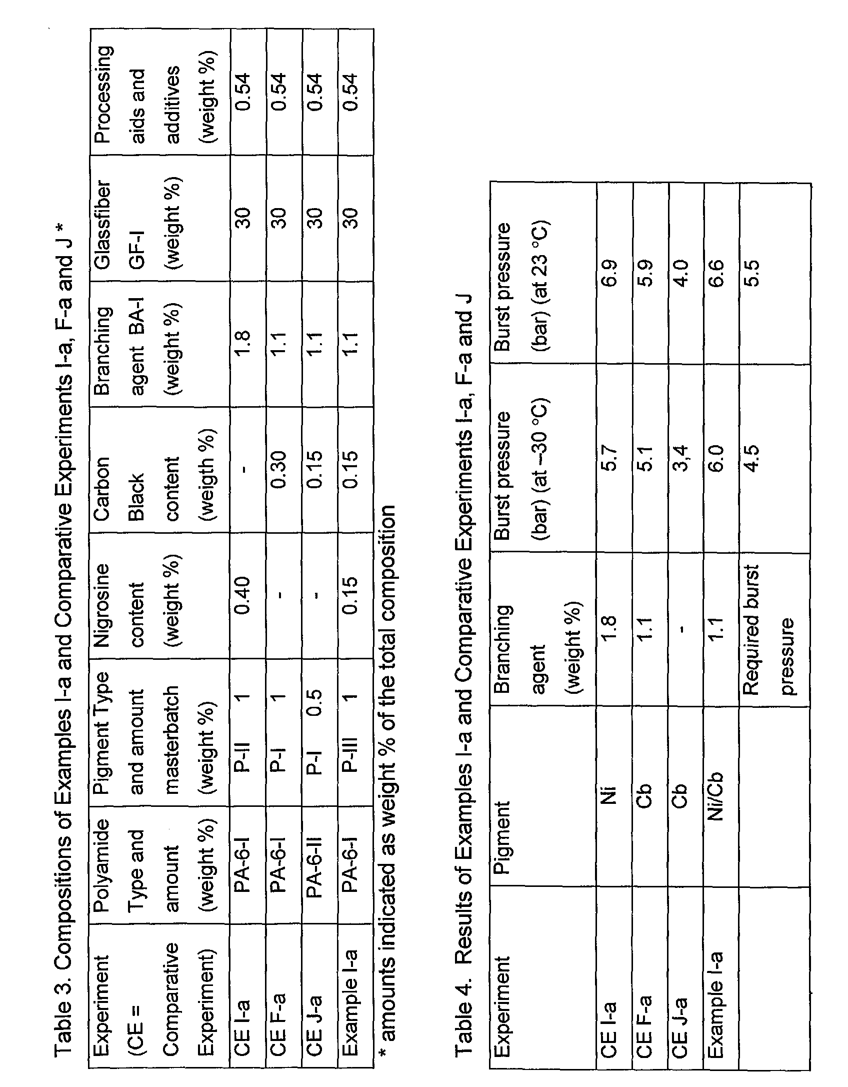

## Claims

1. Polyamide composition comprising a polyamide and a black polyaniline derivative, **characterized in that** the composition further comprises at least a branching agent having functional groups that can react with functional groups on the polyamide, and carbon black.

2. Polyamide composition according to claim 1, wherein the composition is based on a branching agent comprising functional groups chosen from the group of carboxylic acid and carboxylic acid anhydrides, or derivatives thereof, and epoxies.

3. Polyamide composition according to claim 3, wherein the branching agent is a copolymer of at least an unsaturated dicarboxylic acid or a derivative thereof and a vinylaromatic monomer.

4. Polyamide composition according to claim 1, wherein the branching agent is present in an amount of 0.1 to 5 weight %, carbon black in an amount of 0.1 to 1 weight % and the black polyaniline derivative in an amount of 0.1 to 1 weight %, with the weight % relative to the amount of polyamide.

5. Polyamide composition according to claim 1, wherein the black polyaniline derivative is nigrosine.

6. Polyamide composition according to claim 1, wherein the composition is based on a polyamide having a relative viscosity of at least 2.3 and/or end group concentration of more than 20 meq/g.

7. Polyamide composition according to claim 1, wherein the composition comprises at least one additive chosen from the group of reinforcement agents, fillers, flame retardants, stabilizers, processing aids.

8. Process for preparing a polyamide composition comprising melt-mixing of components comprising a polyamide and a polyaniline, **characterized in that** the components further comprise at least a branching agent and carbon black.

9. Use of a polyamide composition according to any of claims 1-7 or obtainable by the process according to claim 8 for the manufacturing of a molded part by means of an injection molding or extrusion technique.

10. Molded part prepared from a composition according to any of claims 1-7 or obtainable by the process of claim 8.

11. Process for preparing an assembled product in which at least two parts are bonded together by means of a welding technique, **characterized in that** at least one of the parts substantially consists, at least at the location of a surface to be welded, of a polyamide composition according to any of claims 1-7 or obtainable by the process of claim 8.

12. Assembled product comprising a molded part according to claim 10.

13. Assembled product according to claim 12, comprising at least two parts being bonded together by means of a welding technique, at least one of these parts being a part according to claim 10.
